Europäisches Patentamt

(19) European Patent Office

Office européen des brevets

(11) Publication number: **0 041 348**

**B1**

(12) **EUROPEAN PATENT SPECIFICATION**

(45) Date of publication of patent specification: **16.04.86**

(21) Application number: **81302270.4**

(22) Date of filing: **21.05.81**

(51) Int. Cl.⁴: **G 01 N 21/87**

(54) **A method of assessing the colour in diamonds and other gems.**

(30) Priority: **04.06.80 GB 8018288**

(43) Date of publication of application:
**09.12.81 Bulletin 81/49**

(45) Publication of the grant of the patent:
**16.04.86 Bulletin 86/16**

(84) Designated Contracting States:
**BE CH DE FR GB LI NL**

(56) References cited:
**DE-A-2 021 633**
**DE-U-7 418 353**
**FR-A-2 438 837**
**GB-A-2 010 474**
**US-A-2 960 909**
**US-A-3 944 368**
**US-A-3 989 379**

(73) Proprietor: **DE BEERS CONSOLIDATED MINES LIMITED**
**36 Stockdale Street**
**Kimberley (ZA)**

(72) Inventor: **Woods, Geoffrey Steward**
**Shamrock Villa Nine Mile Ride**
**Wokingham Berkshire (GB)**

(74) Representative: **Ellis-Jones, Patrick George Armine et al**
**J.A. KEMP & CO. 14 South Square Gray's Inn**
**London WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to the assessment of colour in diamonds and other cut gems.

A perfect diamond crystal would be expected to be completely colourless and would, therefore, transmit equally well all radiation with wavelengths from 380 nanometres (nm) to 750 nm i.e. the wavelengths constituting "white" light. The majority of diamonds, however, display some colour due to the presence of defects. These defects cause the diamond to absorb selectively at one or more regions within the visible wavelength range thus causing an imbalance in the mixture of wavelengths which make up the "white" light incident upon it and producing a sensation of colour. A defect which imparts colour to the host crystal in this manner is called a "colour centre".

Traditionally, the colour of a cut and polished diamond, especially one in the range from colourless to yellow, known as a "Cape series" diamond, has been estimated visually by comparing the stone in question with a preselected set of stones of increasing depth of yellowness. Various systems of standard colour samples have evolved in different parts of the world, for example, the GIA (Gemological Institute of America) and AGS (American Gemological Society) systems in the USA as well as the CIJBO (Confederation Internationale de la Bijouterie, Joaillerie, Orfevrerie des Diamants Perles et Pierres) and the German RAL standard. Various attempts have been made to facilitate the visual grading of diamonds. These include the disclosue of DE—A—2021633 where steps are taken to ensure that the stone is uniformly illuminated; this is achieved by having an angular fluorescent tube, described as a diffuse light source, surrounding the gem, which can be adjusted so as to avoid much of the light being reflected off the facets of the gem rather than penetrating it. US—A—3944368 describes apparatus which utilises difused light and indirectly reflected light to view the gem. Such a light source is used in an attempt to overcome difficulties in determining the colour visually because of "interference" as a result of specular reflection from the facets of the gem.

The visible method of colour grading is clearly open to criticism since it is a subjective test which is likely to vary from person to person depending on such factors as genetic characteristics, experience in colour assessment, age and sex. Furthermore, the ability of any individual to grade consistently from day to day is influenced by physical factors such as the nature of the ambient illumination, and by physiological factors such as the state of the dark, light and colour adaption of the eye and state of health. In consequence, therefore, inconsistencies inevitably arise.

These factors are well recognised and various techniques have been devised to obtain a truly objective and reproducible colour measurement, see, for example US—A—3989379. Also FR—A—2438837 describes a method where a light of a given single wavelength is projected at the gem, the proportion of incident light transmitted by the gem is photoelectrically determined and this determination is repeated for different wavelengths of light over the visible wavelength range so as to obtain a transmission spectrum and the chromaticity co-ordinates are calculated therefrom. In this method considerable care has to be taken to align the gem so as to make the axis of the beam of light co-linear with an axis of symmetry of the gem which is normal to the table of the gem. However, these prior art techniques have not been wholly satisfactory and although they are objective it has frequently been found that the results obtained conflict with those obtained by skilled graders. Clearly, therefore, a technique which may be objective is unsatisfactory if it is not acceptable to graders.

The present invention relates to a method whereby it is possible to obtain a truly objective set of measurements which do not conflict with assessments made by skilled graders. According to the present invention there is provided a method of assessing the colour of a gem which comprises subjecting the gem to light of a given single wavelength, photoelectrically determining the proportion of said light incident upon the gem which is transmitted by the gem, repeating this determination for different wavelengths of light over the visible wavelength range so as to obtain a transmission spectrum and calculating the chromaticity co-ordinates therefrom, characterised in that said gem is mounted in a first aperture of a light integrating sphere, having a second aperture opposite said first aperture and through which said second aperture a beam of said light of a given single wavelength enters said sphere, said sphere also containing a light-diffusing baffle member positioned so that the said beam impinges upon it so as to prevent direct illumination of said gem but to provide diffuse illumination thereof, the light transmitted through the gem to the exterior of said integrating sphere being that which is used for said determining step.

The present invention resides in the realisation that the method described in FR—A—2438837 because it involves the use of a substantially linear beam of light with which to probe the gem cannot give wholly reliable results. Indeed any method or instrument using a directed light beam must always be suspect. In contrast, by using completely diffuse light it is possible to obtain a truly objective and reliable means of assessing colour.

In order to come to this conclusion it is necessary to consider the path of light entering the table of a brilliant cut diamond. It is well-known that if light impinges upon an interface between materials of different refractive indices from the side of the material of greater RI there is a critical angle from the perpendicular ($\theta c$) above which all light is reflected. Below this value some of the light is reflected and some is refracted. If $\theta i$ is the angle of incidence then it can be shown that the reflected intensity varies from 100% when $\theta i$ is 24.5° (=$\theta c$) or more but less than 20% when $\theta i$ is 20° or less. Accordingly, for the angular range 20 to 24.5 there is a very rapid change in the reflected intensity. Likewise, the energy transmitted (corresponding to refraction) also varies very rapidly over this small range of angles of incidence.

If one considers a roughly parallel beam of light perpendicular to the table of a brilliant cut diamond this will, in general, be totally internally reflected by one pavilion facet because the ray will impinge upon the facet at an angle of incidence greater than 24.5°. The ray then proceeds to the opposite pavilion facet where again it is found that the angle of incidence is such that total internal reflection takes place. After this the ray proceeds back towards the front of the stone where, depending on the extent of the table, it impinges either on the table or on one of the crown facets. It is found, that the ray will generally impinge upon the table or the crown facet at an angle below the critical angle $\theta c$. The exact angle for a particular ray depends firstly upon the original angle of incidence of the ray when falling upon the stone from outside but, more particularly, very sensitively upon the precise cut of the stone, the most important parameters in this respect being pavilion depth and table diameter.

In these circumstances, it will be appreciated, therefore, that at this interface some of the light will be reflected and some will be transmitted. Thus when one integrates this effect for all the rays present in the light beam falling upon the stone it can be appreciated that the amount of light escaping from the stone at this stage depends sensitively upon the cut.

The light which is not refracted at this stage is re-reflected back into the body of the stone where it undergoes a further series of reflections at various facets, with possible refraction at each internal reflection depending on the angle of incidence at each facet.

Since the colour of the stone depends upon the absorption of particular wavelengths from the beam of light passing through it and the amount of absorption depends in turn not only on the concentration of colour centres in the diamond but also on the path length of the beam within the stone it can be seen that the apparent colour of a particular stone when determined instrumentally depends sensitively upon the cut. Thus it is quite conceivable that an instrument evaluation may contradict the order in which the eye places a series of stones.

Clearly, the apparent colour measured in this way will depend upon the degree of collimation of the incident light beam, its cross-section or shape and area as well as on the size and cut of the stone. Any method or instrument which attempts to measure colour by probing the stone with a more or less directed (parallel or slightly convergent) incident beam and then measuring the transmitted light will be subject to greater or lesser degrees of uncertainty.

In order to overcome this difficulty, in the present invention, means are arranged to produce a perfectly diffuse source of light is used. In this way, light strikes the surface of the stone at all different angles as, indeed, is the case when a grader examines a stone with his own eye, so that the cut of the stone does not affect the results. it will be appreciated, therefore, that, in contrast to the proposal in FR—A—2438837, very accurate arranging of the gem is unnecessary. GB—A—2010474 and US—A—2960909 both describe colorimetric methods for assessing the colour of gem stones in which a diffuser is used for the light entering the gem. However the diffuser is not disclosed as being a fundamental piece of equipment; rather it is used to ensure that the light source is of "substantially uniform "colour" across the cross-section of the beam" or that "sufficient light (passes) through the gem". Thus, as with visual grading methods where a diffuser is used, the diffuser is merely to make it easier to obtain the result rather than to affect fundamentally the nature of the result as in the present invention.

In carrying out the present invention a device is used which is suitable for illuminating the gem with diffuse light such that the light transmitted can be measured accurately.

This device comprises, in effect, an integrating sphere. This typically takes the form of a hollow box having two holes on opposite sides. The box is coated with a perfectly diffuse reflector at all wavelengths. This is well approximated in practice by coating the inside of the "sphere" with specially prepared barium sulphate or magnesium oxide paint. One of the holes of the "sphere" is to allow a beam of light to enter it and the other is to receive the specimen. In the box, between the two apertures, is placed a baffle which is similarly coated with a diffuse reflector. As a result, the light entering the box impinges upon this baffle which has the effect of diffusing the light completely. The gem is secured in the other hole of the box in a completely light-proof manner so that all light leaving the box does so as a result of transmission through a gem.

Typically, the gem can be mounted in a holder, for example a ring, having a tapered opening, typically a frusto-conical opening. The diamond is inserted table first into the larger diameter opening and it can be secured in position with the aid of, for example, barium sulphate powder.

It will generally be most convenient to arrange the holder in a light-proof manner in the hole in the sphere with the table of the gem facing into the sphere. It will, however, be appreciated that it is not necessary for the table of the gem to be aligned precisely normal to the axis of the two holes.

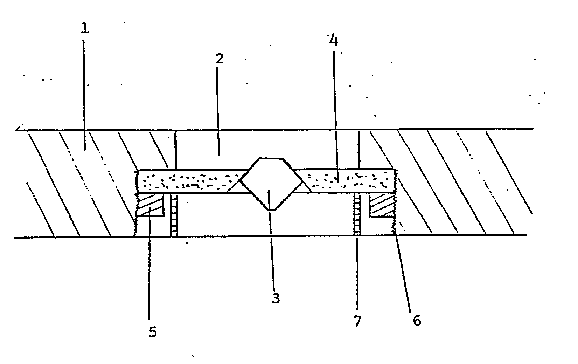

A typical arrangement of holder is illustrated in the Figure of the accompanying drawing. In the Figure (which is not to scale) a wall, 1, of the "sphere" possesses a hole, 2. A diamond, 3, is mounted in a ring, 4. The ring 4 is held in light-proof manner in the hole 2 with the aid of a threaded collar, 5, which threadedly engages threads 6 in the wall, 1. The ring 4 is equipped with an upstanding annulus 7. The ring 4 together with its annulus 7 is coated with barium sulphate to diffuse the light. The annulus is provided to eliminate the possibility of light, which has been transmitted by the stone, impinging upon a surface, for example of the collar 5, which might introduce a stray "colour" in the measurement.

The diamond, 3, can be secured in the ring 4 by being pressed into the barium sulphate powder. Then the integrating sphere with the gem mounted in it is secured to the (principal) integrating sphere, provided with a photodetector, as described in FR—A—2438837, and equivalent GB—A—2036360, with the gem at the entrance port of the sphere.

The light source is conveniently from a spectrophotometer, the principal component of which is a monochromator, usually a defraction grating, which provides a beam of light of a single wavelength. This wavelength may be continuously varied over a predetermined range, generally from about 740 nm down to about 380 nm. At each wavelength the light which is transmitted by the gem passes into the principal integrating sphere and the photodetector or photocell measures the percentage transmitted as a function of wavelength thus providing a transmission spectrum. The subsequent measurements and calculations can then be carried out precisely as described in FR—A—2438837 to which reference should be made for further details.

Chromaticity co-ordinates have been calculated using the method of the present invention and a set of stones of different grades obtained. Good correspondence has been obtained between the set composed in this way and standard sets composed by experienced graders using the naked eye.

## Claims

1. A method of assessing the colour of a gem which comprises subjecting the gem to light of a given single wavelength, photoelectrically determining the proportion of said light incident upon the gem which is transmitted by the gem, repeating this determination for different wavelengths of light over the visible wavelength range so as to obtain a transmission spectrum and calculating the chromaticity co-ordinates therefrom, characterised in that said gem is mounted in a first aperture of a light integrating sphere, having a second aperture opposite said first aperture and through which said second aperture a beam of said light of a given single wavelength enters said sphere, said sphere also containing a light-diffusing baffle member positioned so that the said beam impinges upon it so as to prevent direct illumination of said gem but to provide diffuse illumination thereof, the light transmitted through the gem to the exterior of said integrating sphere being that which is used for said determining step.

2. A method according to claim 1 in which the gem is a diamond.

3. A method according to claim 2 in which the gem is a brilliant cut diamond.

4. A method according to any one of claims 1 to 3 in which the said first aperture (2) is provided with a ring (4) in which the specimen (3) can be mounted, said ring being held in light-proof manner in the said first aperture by a threaded collar (5) which threadedly engages the walls (1) of the aperture (2), the axis of the gem being substantially co-incident with the axis of the ring, the ring being equipped with an upstanding annulus (7) positioned around the axis of the ring and coated so as to diffuse light which impinges on it from within the sphere.

5. A method according to claim 4 in which the gem is secured to the ring with compressed barium sulphate powder.

6. A method according to any one of the preceding claims in which the colour of a series of diamonds or other gems is assessed and the resulting diamonds or other gems graded with reference to their chromaticity co-ordinates so as to provide a set for use as a comparative standard for colour assessment.

## Patentansprüche

1. Verfahren zur Beurteilung der Farbe eines Edelsteins, bei dem der Edelstein Licht einer einzigen vorgegebenen Wellenlänge ausgesetzt wird, der von dem Edelstein ausgesandte Anteil des auf den Edelstein einfallenden Lichtes photoelektrisch bestimmt wird, wobei dieser Anteil von dem Edelstein übertragen wird, diese Bestimmung für verschiedene Wellenlängen des Lichtes über den sichtbaren Wellenlängenbereich wiederholt wird, um ein Transmissionsspektrum zu erhalten, und daraus die Farbwertkoordinaten berechnet werden, dadurch gekennzeichnet, daß der Edelstein in einer ersten Öffnung eines lichteinfallenden (lichtintegrierenden) Raumes angeordnet wird, der eine der ersten Öffnung gegenüberliegende zweite Öffnung aufweist, durch die der Lichtstrahl einer einzigen vorgegebenen Wellenlänge in dem Raum gelangt, daß der Raum darüberhinaus ein lichtstreuendes Ablenkteil enthält, das so angeordnet ist, daß der Lichtstrahl so darauf trifft, daß unter Vermeidung direkter Beleuchtung des Edelsteins eine diffuse Beleuchtung desselben erfolgt, wobei das durch den Edelstein hindurch in das Äußere des lichteinfangenden Raumes ausgesandte Licht dasjenige Licht ist, das für den Bestimmungsschritt verwendet wird.

2. Verfahren nach Anspruch 1, bei dem der Edelstein ein Diamant ist.

3. Verfahren nach Anspruch 2, bei dem der Edelstein ein Brillant ist.

4. Verfahren nach einem der Ansprüche 1 bis 3, bei dem die erste Öffnung (2) in einem Ring (4) angeordnet ist, in dem die Probe (3) montierbar ist, der Ring durch einen mit den Wänden (1) der ersten Öffnung in Gewindeeingriff stehenden Gewindering (5) lichtdicht festgehalten wird, wobei die Achse des Edelsteins im wesentlichen mit der Achse des rings übereinstimmt und der Ring mit einem aufstehenden Annulus (7) versehen ist, der um die Achse des Rings herum angeordnet ist und so beschichtet ist, daß er vom Innern des Raumes auf ihn auftreffendes Licht zerstreut.

5. Verfahren nach Anspruch 4, bei dem der Edelstein am Ring mit komprimiertem Bariumsulfat-Staub befestigt wird.

6. Verfahren nach einem der vorhergehenden Ansprüche, bei dem die Farbe einer Reihe von Diamanten oder anderen Edelsteinen beurteilt und die sich ergebenden Diamanten oder anderen Edelsteine in bezug auf ihre Farbwertkoordinaten eingeteilt werden, um einen Satz als Vergleichsstandard für Farbbeurteilungen zu schaffen.

**Revendications**

1. Une méthode de détermination de la couleur d'une gemme qui comporte le fait de soumettre la gemme à une lumière d'une longueur donnée et unique, de déterminer photoélectriquement la proportion de cette lumière arrivant sur la gamme, qui est transmise par celle-ci, et de répéter cette opération à diverses longueurs d'onde appartenant à la lumière visible pour obtenir un spectre de transmission et, à partir de là, des coordonnées chromatiques, cette méthode étant caractérisée par le fait que la gemme en question est disposée dans une première ouverture d'une sphère d'intégration de lumière, possédant une seconde ouverture opposée à ladite première ouverture et au travers de laquelle passe un faisceau de ladite lumière de longueur d'onde donnée, la sphère en question contenant également un dispositif diffusant la lumière et installé de manière à ce que ledit faisceau tombe sur lui, ce qui permet un éclairage diffus de la gamme plutôt qu'un éclairage direct, la lumière à analyser étant alors celle transmise par la gemme et sortant de la sphère d'intégration, la lumière transmise par la gemme étant celle utilisée pour ladite opération de détermination.

2. Une méthode décrite dans la revendication 1, dans laquelle la gemme est un diamant.

3. Une méthode selon la revendication 2 dans laquelle la gemme est un diamant brillant taillé.

4. Une méthode selon l'une quelconque des revendications 1 à 3, dans laquelle la première ouverture (2) est munie d'une bague (4) dans laquelle spécimen (3) peut être monté, la bague étant fixée de manière opaque dans ladite première ouverture par un collier (5) fileté dont le filetage s'engage dans les parois de l'ouverture, l'axe de la gemme étant sensiblement en coincidence avec l'axe de la bague, la bague étant équipée d'un anneau (7) se maintenant droit, disposé autour de l'axe de la bague et muni d'un revêtement propre à diffuser la lumière qui lui parvient de l'intérieur de la sphère.

5. Une méthode selon la revendication 4, dans laquelle la gemme est fixée à la bague à l'aide de poudre comprimée de sulfate de baryum.

6. Une méthode selon l'une quelconque des revendications précédentes dans laquelle la couleur d'une série de diamants et autres gemmes est déterminée et les diamants ayant subi cette détermination sont classés selon leurs coordonnées chromatiques pour fournir un ensemble destiné à être utilisé comme un standard de comparaison pour la détermination de la couleur.